## Europäisches Patentamt
## European Patent Office
## Office européen des brevets

(19)

(11) Veröffentlichungsnummer: **0 031 903**
**B2**

(12)

# NEUE EUROPÄISCHE PATENTSCHRIFT

(45) Veröffentlichungstag der neuen Patentschrift :
28.06.89

(51) Int. Cl.⁴ : **B 60 T 17/18**

(21) Anmeldenummer : 80107581.3

(22) Anmeldetag : 04.12.80

(54) Mehrkreisschutzventil, insbesondere für Druckluftbremsanlagen.

(30) Priorität : 20.12.79 DE 2951297

(43) Veröffentlichungstag der Anmeldung :
15.07.81 Patentblatt 81/28

(45) Bekanntmachung des Hinweises auf die Patenterteilung : 13.07.83 Patentblatt 83/28

(45) Bekanntmachung des Hinweises auf die Entscheidung
über den Einspruch : 28.06.89 Patentblatt 89/26

(84) Benannte Vertragsstaaten :
DE FR IT NL SE

(56) Entgegenhaltungen :
DE–A– 2 355 456
DE–A– 2 356 423
DE–A– 2 525 146
DE–A– 2 643 396
FR–A– 2 124 913
FR–A– 2 280 844
GB–A– 470 967
US–A– 2 911 005
US–A– 4 093 315
"PREPOUSTECI VENTIL O- c 03-9613.30" der Firma
PAL

(73) Patentinhaber : KNORR-BREMSE AG
Moosacher Strasse 80 Postfach 401060
D-8000 München 40 (DE)

(72) Erfinder : Unger, Hans
St. Benedikstrasse 7
D-8044 Unterschleissheim (DE)
Erfinder : Brungs, Siegfried, Dr.
Prochintalstrasse 22
D-8000 München 50 (DE)
Erfinder : Kiuntke, Gerhard
Schifferlstrasse 1
· D-8000 München 21 (DE)

EP 0 031 903 B2

## Beschreibung

Die Erfindung betrifft ein Mehrkreisschutzventil nach dem Oberbegriff des Anspruches 1.

Vierkreisschutzventile finden in mehrkreisigen Druckluftbremsanlagen Verwendung, um bei Ausfall eines Kreises die intakten Kreise mit dem sog. Sicherungsdruck zu versorgen. Der Sicherungsdruck ist derjenige Druck, der sich bei Ausfall eines Kreises und förderndem Kompressor in den intakten Kreisen einstellt. Dabei können nicht benötigte Anschlüsse blind geschlossen werden.

Bei derartigen, an sich bekannten Vierkreisschutzventilen ist es üblich, die einzelnen Überströmventile mit begrenzter Rückströmung in einem Gehäuseblock aus Leichtmetall einzusetzen, derart, daß die nachgeschalteten Ventile bzw. Kreise durch Rückschlagventile abgesichert sind. Die Versorgung erfolgt über eine gemeinsame Druckleitung wodurch sich eine Einsparung von Rohren und Verschraubungen für drei Anschlüsse ergibt.

Für die einzelnen Überströmventile sind im allgemeinen gegen Federkraft wirkende Ventilkolben vorgesehen, welche gegenüber dem anstehenden Versorgungsdruck an einen gehäusefesten Ventilsitz andrückbar sind. Ein derartiger, mehrteiliger Ventilaufbau für die einzelnen Kreise des Mehrkreisschutzventils ist baulich aufwendig, insbesondere ist es nicht möglich oder nur mit beträchtlichem Umrüstungen verbunden, den Ventilsitzdurchmesser zu ändern oder sogar asymmetrisch zu gestalten.

Mit der DE-A-2 643 396 ist ein ein Mehrkreisschutzventil der einnangs genannten Art bekannt geworden, bei welchem die sämtlichen Überströmventilen gemeinsame Membrane auf der den Ventilsitzen der Überströmventile abgewandten Seite von einem die Ventilsitze überdeckenden, einteiligen Membranteller belastbar ist, der seinerseits über ein Kugelgelenk von einer allen Überströmventilen gemeinsamen, justierbaren Druckfeder belastet ist. Eine Auswechselbarkeit der Ventilsitze, die zum Erzielen einer Dichtheit aller Überströmventile genau in einer Ebene liegen müssen, ist nicht vorgesehen. Durch Justieren der Druckfeder-Vorspannung ist somit nur der Schaltdruck aller Überströmventile gemeinsam einstellbar.

Die US-A-2 911 005 zeigt für ein pneumatisch kontrolliertes Vierwege-Schaltventil zwei Paare einander abgewandter, gleichachsiger Ventilsitze, wobei sich jeweils ein Ventilsitz eines jeden der beiden Ventilsitz-Paare in einer gemeinsamen Ebene befindet und durch einen verstärkten Abschnitt eine andererseits druckbeaufschlagbaren, gemeinsamen Membrane verschließbar ist. Die Ventilsitze befinden sich hierbei an gesonderten, mit dem Ventilgehäuse verschraubten Ventileinsätzen.

Die Aufgabe der Erfindung besteht darin, ein Mehrkreisschutzventil, insbesondere Vierkreisschutzventil der eingangs genannten Art so auszubilden, daß alle Kreise des Ventils, wie bereits bekannt, mit einem gemeinsamen, dennoch eine gegenseitige Trennung der Kreise sichernden Membran-Ventilelementen von einfacher und billiger Konstruktion versehen werden können, wobei es jedoch möglich sein soll, die Öffnungs- und Schließdrücke der einzelnen Ventile für die einzelnen Kreise zu ändern, ohne daß es einer kostenaufwendigen Nachbearbeitung oder Umrüstung des Mehrkreisschutzventils bedarf.

Diese Aufgabe wird durch die Merkmale nach dem Anspruch 1 gelöst.

Das Mehrkreisschutzventil ist von einfachem Aufbau, da es bei Verwendung einer gemeinsamen, allen Kreisen zugeordneten Membrane möglich ist, die gesamte Fläche des Ventilgehäuses abzudecken, während die in die gehäuseseitigen Aufnahmebohrungen einsetzbaren Ventileinsätze, vorzugsweise aus Kunststoff bestehend, ohne weiteres nach Entnahme der Membrane ausgetauscht oder durch Ventileinsätze anderer Durchmesser ersetzt werden können. Auf diese Weise kann ein und dasselbe Ventilgehäuse für ein Mehrkreisschutzventil unterschiedlicher Verwendung benutzt werden. Vorteilhafte Ausgestaltungen und Weiterbildungen sind in weiteren Ansprüchen aufgeführt.

Die Erfindung ist nachfolgend anhand eines Ausführungsbeispiels unter Bezugnahme auf die beigefügte Zeichnung erläutert.

Figur 1 ist eine Draufsicht auf das als Vierkreisschutzventil ausgebildete Mehrkreisschutzventil nach der Erfindung ; und

Figur 2 ist eine Schnittansicht von Linie II-II in Fig. 1.

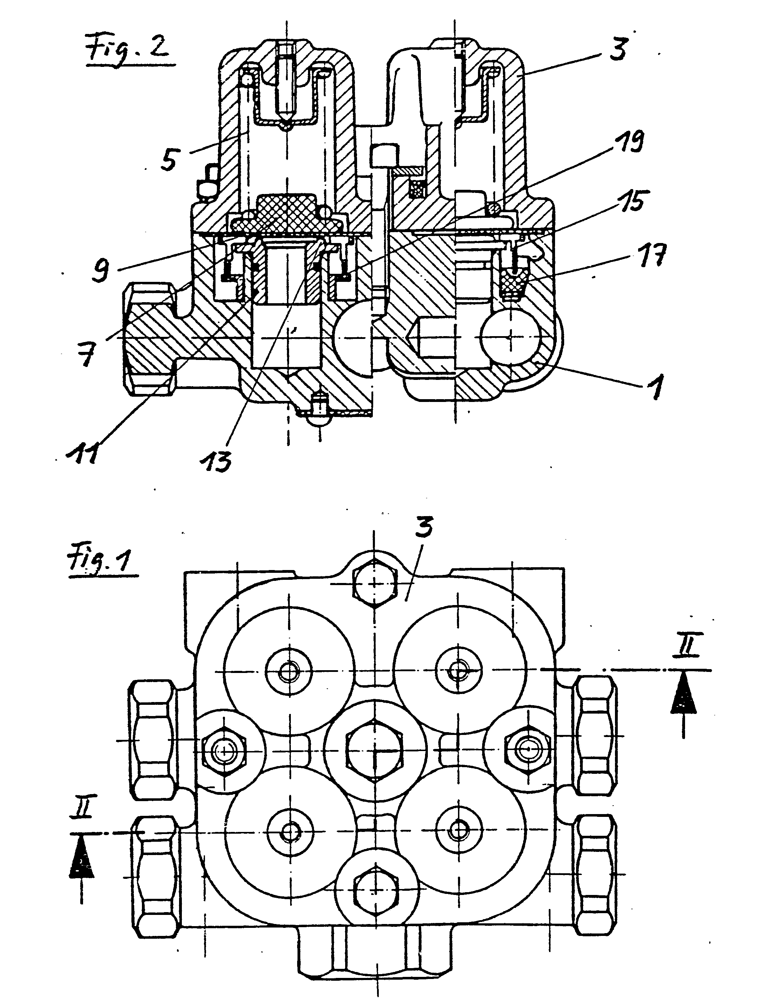

In der Zeichnung nach Figuren 1 und 2 ist ein an sich bekanntes Mehrkreisschutzventil mit einem einzelnen Energiezufluß und mehreren Energieabflüssen dargestellt ; das Gehäuse des als Vierkreisschutzventil dargestellten Mehrkreisschutzventils ist gemäß der aus Fig. 2 ersichtlichen Schnittansicht vorzugsweise zweiteilig, d. h. aus Gehäuseunterteil 1 und Gehäuseoberteil 3 bestehend ausgeführt. Im allgemeinen besteht das Gehäuse als Gußteil, so als Druckgußteil, welches aus an sich bekannten Al-Legierungen gefertigt ist. Den einzelnen, zu versorgenden Kreisen des Mehrkreisschutzventils sind im Gehäuse einzelne Ventile zugeordnet, von welchen in Fig. 2 eines in Schnittansicht und ein weiteres in halbierter Seitenansicht wiedergegeben ist. Gemäß Dartellung nach Fig. 2 ist im Gehäuseoberteil 3 ein durch eine Feder 5 verspannter Ventilteller 7 vorgesehen, welcher auf der Oberseite einer Membrane 9 aufliegt und an dieser einwirkt. Die Membrane 9 ist sämtlichen Ventilen des Gehäuses gemeinsam, obwohl durch die Verschraubung von Gehäuseunter- und -oberteil sichergestellt ist, daß die einzelnen Ventile und somit die Kreise untereinander und nach außen hin abgedichtet sind.

Unterhalb der Membrane 9 sind den einzelnen Ventilen Ventileinsätze 11 zugeordnet, welche bevorzugt aus Kunststoff bestehen. Die Ventileinsätze 11 sind unter Abdichtung in Gehäusebohrungen des Gehäuseunterteils eingesetzt und tragen an ihrer Oberseite den eigentlichen Ventilsitz 13, welcher in Form einer ringförmigen Erhebung dichtend gegenüber der Unterseite der Membrane 9 wirkt. Da der Ventileinsatz 11, wie vorstehend ausgeführt, aus Kunststoff gefertigt wird, ist im Bereich des Ventilsitzes 13 immer eine einwandfreie Oberfläche sichergestellt, was bei herkömmlicher Anbringung von Ventilsitzen in Al-Gehäusen nicht immer zu erreichen ist. Ist es erforderlich, die Druckdifferenz zwischen Öffnungs- und Schließdruck der einzelnen Ventile zu verändern, so ist es lediglich nötig, andere Ventileinsätze mit einem größeren oder kleineren Ventilsitzdurchmesser in das unveränderte Ventilgehäuse, also in den Gehäuseunterteil, zu stecken. Beim Auffüllen der zu versorgenden Anlage, so der Druckluftbremsanlage eines Kraftfahrzeugs, strömt Druckluft vom Kompressor über den Energiezufluß in das dargestellte Mehrkreisschutzventil und beaufschlagt jeweils die einzelnen Membranringflächen, die zwischen dem Einspannrand der einzelnen Membranabschnitte und der radial inneren Dichtlinie zwischen Ventileinsatz und Membrane bestehen. Ist der Öffnungsdruck erreicht, dann werden die Membranen, im vorliegenden Fall die einzelnen Membranabschnitte der einzelnen Ventile, entgegen der Kraft der Federn 5 angehoben, und es werden dadurch die Ventilsitze geöffnet, derart, daß Druckluft in die an die Energieabflüsse angeschlossenen Druckluftbehälter für die Betriebsbremskreise des Kraftfahrzeuges strömen kann. Nach dem es sich beim vorliegenden Mehrkreisschutzventil um ein seiner Funktion nach bekanntes Vierkreisschutzventil, insbesondere für Kraftfahrzeugbremsanlagen handelt, erübrigt sich eine ins einzelne gehende Erläuterung der Funktionsweise.

Zwischen dem Einspannrand der einzelnen Membranabschnitte und den Ventilsitzen können Stützringe 15 vorgesehen sein (Fig. 2), welche die Eindrückung der Ventilsitze in die Membrane auf ein bestimmtes, zulässiges Maß begrenzen und welche auch (Fig. 2) der Fixierung von Nutringen 17 dienen können. Derartige Nutringe werden als Rückschlagventile verwendet. In Kreisen ohne derartige Rückschlagventile können Schutzringe 19 vorgesehen sein, welche die Aufgabe besitzen, Schmutzpartikel, wie Öl, Kohle, die mit der Druckluft in das Ventil einströmen, aus der Druckluft abzustreifen, so daß diese nicht mit dem Luftstrahl auf die Membrane auftreffen können.

Bezugszeichenliste

1 Gehäuseunterteil
3 Gehäuseoberteil
5 Feder
7 Ventilteller
9 Membrane
11 Ventileinsatz
13 Ventilsitz
15 Stützring
17 Nutring
19 Schutzring

## Patentansprüche

1. Mehrkreisschutzventil, insbesondere für Druckluftbremsanlagen, mit in einem Gehäuse angeordneten, von einem gemeinsamen Energiezufluß gespeisten Überströmventilen, welche die Druckluftbehälter mehrerer Kreise speisen, wobei die einzelnen Überströmventile jeweils mit einem durch die Kraft einer Feder an einen Ventilsitz andrückbaren Ventilelement versehen sind, das aus einer sämtlichen Überströmventilen gemeinsamen Membrane (9) besteht, welche die Kreise der einzelnen Überströmventile untereinander und nach außen hin abdichtet, worin die den einzelnen Kreisen zugeordneten Membranabschnitte durch die Kraft der Feder (5) jeweils gegen einen Ventilsitz (13) andrückbar sind, dadurch gekennzeichnet, daß der Ventilsitz (13), um die Öffnungs- und Schließdrücke der einzelnen Ventile für die einzelnen Kreise zu ändern, durch einen austauschbaren Ventileinsatz getragen ist, wodurch der Durchmesser des Ventilsitzes sich ändern läßt.

2. Mehrkreisschutzventil nach Anspruch 1, dessen Gehäuse in einen Gehäuseoberteil und in einen Gehäuseunterteil aufgeteilt ist, dadurch gekennzeichnet, daß die Membrane (9) flächendeckend den gesamten Gehäuseunterteil (1) überspannt und durch den Gehäuseoberteil (3) dichtend abgedeckt ist, derart, daß der gesamte Außenumfang der Membrane (9) als auch der Zwischenbereich zwischen den einzelnen Überströmventilen abgedichtet sind.

3. Mehrkreisschutzventil nach Anspruch 1, dadurch gekennzeichnet, daß die Ventileinsätze (11) aus Kunststoff bestehen und nach Demontage des Gehäuseoberteils und der Membrane in entsprechende Gehäusebohrungen des Gehäuseunterteils (1) einsteckbar sind.

4. Mehrkreisschutzventil nach einem der vorangehenden Ansprüche, gekennzeichnet durch den Außenumfang der Ventileinsätze (11) umgebende, zwischen Ventilsitz und Einspannrand befindliche Stützringe (15) für die einzelnen Membranabschnitte.

## Claims

1. Multi-circuit protection valve, particularly for compressed air brake systems, comprising pressure protection valves which are arranged in a housing and fed from a common energy supply and which feed the compressed air reservoirs of several circuits, each of the pressure protection valves being furnished with a valve element capable of being pressed against a valve seat by the force of a spring, said valve element consisting of a diaphragm (9) common to all pressure protection valves and which seals the circuits of the individual pressure protection valves from one another and from the outside, the diaphragm sections allocated to the individual circuits being capable of being pressed against a valve seat (13) by the force of the spring (5), wherein, for the purpose of changing the opening and closing pressures of the individual valves for the various circuits, the valve seat (13) is supported by an exchangeable valve insert, thereby allowing the diameter of the valve seat to be altered.

2. Multi-circuit protection valve as defined in Claim 1, the housing of the said valve being subdivided into an upper housing part and a lower housing part, wherein the diaphragm (9) spans and covers the area of the entire lower housing part (1) and is covered and sealed by the upper housing part (3), such that the entire outer circumference of the diaphragm (9) and the intermediate area between the individual pressure protection valves are sealed.

3. Multi-circuit protection valve as defined in Claim 1, wherein the valve inserts (11) consist of plastics and, after the removal of the upper housing part and diaphragm, are capable of plugging into matching holes in the lower housing part (1).

4. Multi-circuit protection valve as defined in any one of the preceding claims, wherein supporting rings (15) for the individual diaphragm sections enclose the outer circumference of the valve inserts (11) and are located between valve seat and clamping edge.


**Revendications**

1. Valve de protection à plusieurs voies, notamment pour des installations de frein à air comprimé, avec des soupapes de décharge disposées dans un boîtier, alimentées à partir d'une source commune d'énergie et alimentant les réservoirs à air comprimé de plusieurs circuits, les différentes soupapes de décharge étant chacune pourvues d'un élément de soupage susceptible d'être pressé contre un siège de soupape par la force d'un ressort, lequel élément de soupape est constitué par une membrane (9) qui est commune à toutes les soupapes de décharge et qui assure l'étanchéité des circuits des différentes soupapes de décharge, entre eux et par rapport à l'extérieur, alors que les sections de membrane qui sont associées aux différents circuits sont susceptibles d'être pressées respectivement contre un siège de soupape (13) par la force du ressort (5), caractérisée par le fait que le siège de soupape (13) est, pour pouvoir modifier les pressions d'ouverture et de fermeture des différentes soupapes pour les différents circuits, porté par une garniture de soupape remplaçable, grâce à quoi, on peut modifier le diamètre du siège de soupape.

2. Valve de protection à plusieurs voies selon la revendication 1, dont le boîtier est subdivisé en un élément de boîtier supérieur et un élément de boîtier inférieur, caractérisée par le fait que la membrane (9) est tendue, à recouvrement de surface, sur la totalité de la partie inférieure (1) du boîtier et est recouverte de façon étanche par la partie supérieure (3) du boîtier, la réalisation étant telle que la totalité de la périphérie extérieure de la membrane (9), de même que la partie intermédiaire entre les différentes soupapes de décharge, sont rendues étanches.

3. Valve de protection à plusieurs voies suivant la revendication 1, caractérisée par le fait que les sièges de soupape (11) sont constitués avec une matière plastique et sont susceptibles, après démontage de la partie supérieure du boîtier et de la membrane, d'être insérés dans des perçages correspondant de la partie supérieure (1) du boîtier.

4. Valve de protection à plusieurs voies selon l'une des revendications précédentes, caractérisée par des bagues d'appui (15) pour les différentes sections de la membrane, situées entre le siège de soupage et le bord de sertissage, et entourant la périphérie extérieure des garnitures de soupapes (11).

*Fig. 2*

*Fig. 1*

1